# EUROPEAN PATENT APPLICATION

(11) **EP 1 324 191 A1**
(43) Date of publication of application: **02.07.2003**
(21) Application number: 01830814.8
(22) Date of filing: 27.12.2001
(51) Int. Cl.: G06F 9/318

(54) **Processor architecture, related system and method of operation**

(71) Applicant: STMicroelectronics S.r.l., 20041 Agrate Brianza (Milano) (IT)
(72) Inventor: Cremonesi, Alessandro, 20079 S. Angelo Lodigiano (Lodi) (IT); Rovati, Fabrizio, 20092 Cinisello Balsamo (Milano) (IT); Pau, Danilo, 20099 Sesto San Giovanni (Milano) (IT)
(74) Representative: Bosotti, Luciano

(57) **Abstract**

A processing architecture enables execution of one first set of instructions (OsTask1.1, OsTask1.2, ...) and one second set of instructions (MmTask2.1, MmTask2.2, MmTask2.3, ...) compiled for being executed by two different CPUs, the first set of instructions (OsTask1.1, OsTask1.2, ...) not being executable by the second CPU, and the second set of instructions (MmTask2.1, MmTask2.2, MmTask2.3, ...) not being executable by the first CPU. The architecture comprises a single CPU (CPU3) configured for executing both the instructions of the first set (OsTask1.1, OsTask1.2, ...) and the instructions of the second set (MmTask2.1, MmTask2.2, MmTask2.3, ...). The single CPU in question (CPU3) being selectively switchable between a first operating mode, in which the single CPU (CPU3) executes the first set instructions (OsTask1.1, OsTask1.2, ...), and a second operating mode, in which the single CPU (CPU3) executes the second set of instructions (MmTask2.1, MmTask2.2, MmTask2.3, ...). The single processor (CPU3) is configured for recognizing a switching instruction between the first operating mode and the second operating mode and for switching between the first operating mode and the second operating mode according to the switching instruction. The solution can be generalized to the use of a number of switching instructions between more than two execution modes for different CPUs.

## Description

### Field of the invention

The present invention relates to processing architectures and to systems that implement said architectures.

The invention has been developed with particular attention paid to microprocessing architectures that may find application in mobile-communication systems. The scope of the invention is not, however, to be understood as limited to this specific field of application

### Description of the prior art

The typical system architecture of a cell phone is based upon the availability (instantiation) of a number of central processing units (CPUs).

These are usually two processing units, each of which fulfils a specific purpose.

The first CPU performs control functions that substantially resemble the ones of an operating system. This type of application is not particularly demanding from the computational standpoint, nor does it require high performance. Usually it envisages the use of an architecture of a scalar pipeline type made up of simple fetch-decode-read-execute-writeback stages.

The second CPU performs functions that have characteristics that are altogether different in terms of computational commitment and performance. For this reason, it usually envisages the use of a superscalar or very-long-instruction-word (VLIW) pipeline processor capable of issuing and executing a number of instructions per cycle. These instructions can be scheduled at the compiling stage (for the VLIW architecture) or at the execution stage (for superscalar processors).

This duplication of computational resources leads to a duplication of the requirements in terms of memory, with consequent greater power absorption. The latter can be partially limited, but not avoided, by alternately setting either one or the other of the CPUs in sleep mode.

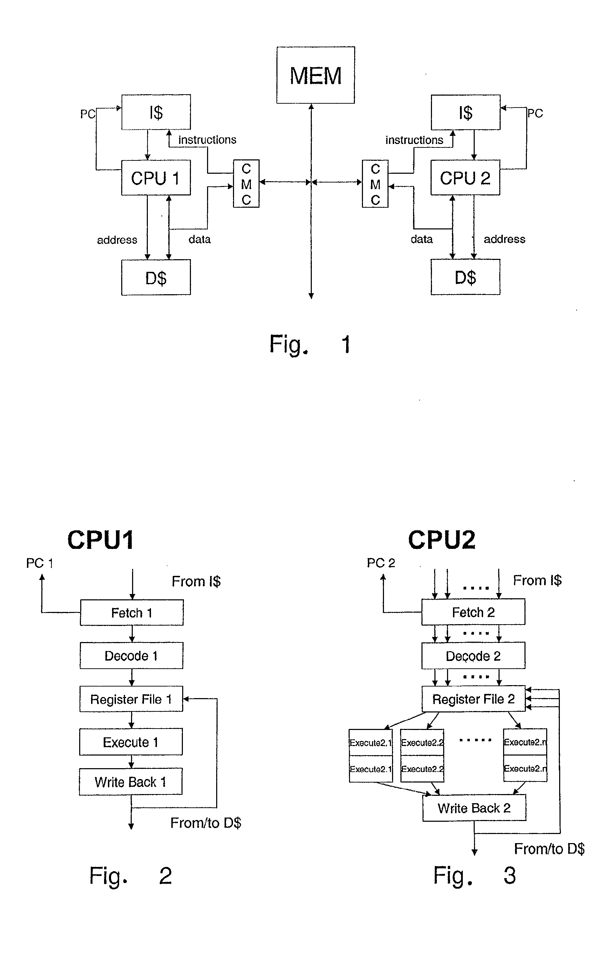

With reference to Figure 1, a typical architecture for wireless applications of the type described comprises two CPUs, such as two microprocessors, designated by CPU1 and CPU2, each with a cache-memory architecture of its own.

The CPU1 is typically a 32-bit pipelined scalar microprocessor. This means that its internal architecture is made up of different logic stages, each of which contains an instruction in a very specific state. This state can be one of the following:
- loading of the instruction from the memory;
- decoding;
- addressing of a register file;
- execution; and
- writing/reading of data from the memory.

The number of bits refers to the extent of the data and instructions on which the CPU1 operates. The instructions are generated in a specific order by compilation and are executed in that order.

The CPU2 is typically a 128-bit pipelined superscalar or VLIW microprocessor. This means that its internal architecture is made up of different logic stages, some of which can execute instructions in parallel, for example in the execution step. Typically, parallelism is of four 32-bit instructions (corresponding to 128 bits), whilst the data are expressed on 32 bits.

A processor is said to be superscalar if the instructions are dynamically re-ordered during execution in order to feed the execution stages that can potentially work in parallel and if the instructions are not mutually dependent, thus altering the order generated statically by the compilation of the source code.

The processor corresponds, instead, to the solution referred to as VLIW (Very Long Instruction Word) if the instructions are statically re-ordered in the compilation step and executed in the fixed order, which is not modifiable during execution.

Again with reference to the diagram of Figure 1, it may be seen that each processor CPU1, CPU2 has a data cache of its own, designated by D$, and an instruction cache of its own, designated by I$, so as to be able to load in parallel from the main memory MEM both the data on which to work and the instructions to be executed.

The two processors CPU1, CPU2 are connected together by a system bus, by which the main memory MEM is connected. The two processors CPU1, CPU2 compete for access to the bus - which is achieved through respective interfaces referred to as core-memory controllers - CMCs - when the instructions, data or both, on which they must operate, are not available in their own caches, since they are, instead, located in the main memory. It may be appreciated that such a system uses two microprocessors, with their corresponding two memory hierarchies, which are indispensable and somewhat costly, both in terms of occupation of area and in terms of power consumption.

By way of reference, in a typical application, the CPU1 usually has 16 Kbytes of data cache plus 16 Kbytes of instruction cache, whilst the CPU2 usually has 32 Kbytes of data cache plus 32 Kbytes of instruction cache.

Figure 2 illustrates the logic scheme of the CPU1.

The first stage generates the memory address of the instruction cache I$ to which the instruction to be executed is associated. This address, referred to as Program Counter, causes loading of the instruction (fetch) that is to be decoded (decode), separating the bit field that defines the function (for example, addition of two values of contents in two registers located in the register file) from the bit fields that address the operands. These addresses are sent to a register file from which the operands of the instruction are read. The operands and bits that define the instructions that are to be executed are sent to the execution unit (execute), which performs the desired operation (e.g., addition). The result can then be re-stored in the memory (writeback) in the register file.

The load/store unit enables, instead, reading/writing of possible memory data, exploiting specific instructions dedicated to the purpose. It may, on the other hand, be readily appreciated that there exists a biunivocal correspondence between the set of instructions and the (micro)processing architecture.

What has been said above with reference to the CPU1 substantially also applies to the CPU2, in the terms recalled in the diagram of Figure 3.

The main difference lies, in the case of the CPU2, in the greater number of execution units available which are able to operate in parallel in a superscalar and

VLIW processor; in this connection, see the various stages indicated by Execute 2.1, Execute 2.2, ..., Execute 2.n, in Figure 3. Also in this case, however, there exists a biunivocal correspondence between the set of instructions and the processing architecture.

In architectures such as, for instance the architectures of wireless processors, it is common to find that the two sets of instructions are different.

This implies that the instructions executed by the CPU1 cannot be executed by the CPU2, and vice versa.

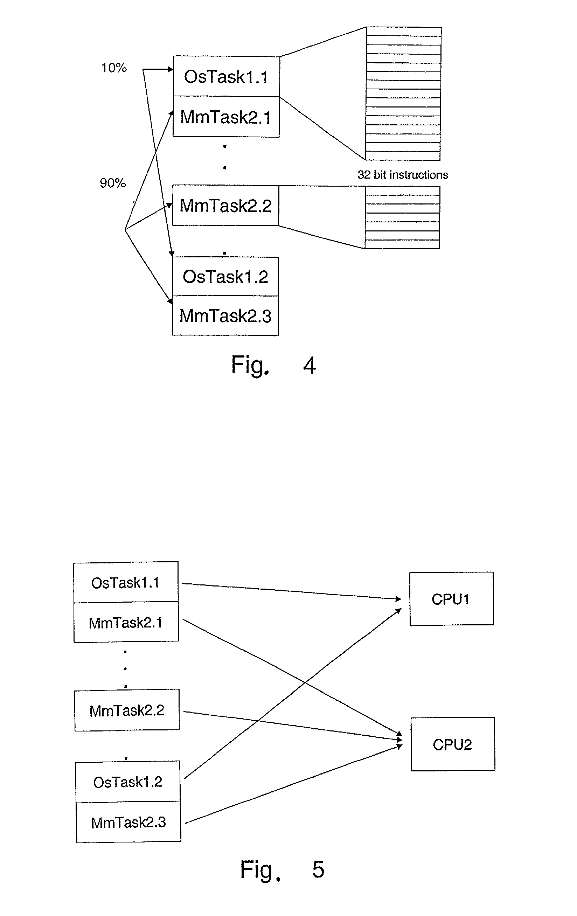

Suppose, with reference to Figures 4 and 5, that we have to do with types of processing that take the form of two respective sets of instructions of this nature.

For example, with reference to the applicational context (mobile communication) already cited previously, it is possible to distinguish two types of processes:
- processes OsTask1.1, OsTask1.2, etc., which resemble operating-system processes performed by the CPU1; and
- processes MmTask2.1, MmTask2.2, MmTask2.3, etc., which regard the processing of contents (usually multimedia contents, such as audio/video/graphic contents) performed by the CPU2.

The former processes contain instructions generated by the compiler of the CPU1, and hence can be performed by the CPU1 itself, but not by the CPU2. For the second processes exactly the opposite applies.

It may moreover be noted that each CPU is characterized by a compilation flow of its own, which is independent of that of the other CPU used.

The diagram of Figure 5 shows how the sequence of scheduling of the aforesaid tasks is distributed between the two processors CPU1 and CPU2.

If we set at 100 the total time of execution of the aforesaid processes, typically the former last 10% of the time, whilst the latter occupy 90% of the total execution time.

It follows from this that the CPU1 can be considered redundant for 90% of the time, given that it remains active only 10% of the time.

The above characteristic may be exploited by turning the CPU1 off in order to achieve energy saving.

However, the powering-down procedures introduce extra latencies of processing that are added to the 10% referred to above. These procedures envisage in fact:
- powering-down of the CPU with the exception of the register file by gating the clock that supplies all the internal registers, as well as the other units (e.g., decoding unit, execution unit) present in the core;
- complete powering-down of the CPU, maintaining energy supply in the cache memories; and
- powering-down of the CPU as a whole, as well as in the data cache and instruction cache.

From a structural standpoint, since the state of the processor that characterized the processor itself prior to powering-down must be restored when the processor is powered back up following upon the operations described previously, the latencies introduced range from tens of nanoseconds to tens/hundreds of milliseconds. It follows that the aforesaid powering-down procedures are costly both from the energy standpoint and from the computational standpoint.

### Object and summary of the present invention

The object of the present invention is therefore to define a microprocessing-system architecture that is able to overcome the drawbacks outlined above.

According to the present invention, this object is achieved thanks to an architecture having the characteristics specified in the claims which follow. The invention also relates to the corresponding system, as well as to the corresponding procedure of use.

Essentially, the solution according to the invention is based upon the recognition of the fact that duplication or, in general, multiplication of the resources (CPU memory, etc.) required for supporting the control code envisaged for operating according to the modalities referred to previously may be avoided if the two (or more) CPUs originally envisaged can be fused into a single optimized (micro)architecture, i.e., into a new processor that is able to execute instructions generated by the compilers of the various CPUs, with the sole requirement that the said new processor must be able to decode one or more specific instructions such as to switch its function between two or more execution modes inherent in different sets of instructions.

This instruction or these instructions are entered at the head of each set of instructions compiled using the compiler already associated to the CPU.

In particular, two steps are envisaged.

The first step involves compiling of each process, using, in an unaltered way, the compilation flow of the CPU1 or CPU2 (in what follows, for reasons of simplicity, reference will be made to just two starting CPUs, even though the invention is applicable to any number of such units).

The second step takes each set of instructions and enters a specific instruction at the head thereof so as to signal and enable mode switching between the execution mode of the CPU1 and the execution mode of the CPU2 in the framework of the optimized micro-architecture.

The above involves considerable savings in terms of memory and power absorption. In addition, it enables use of just one fetch unit, which detects the switching instruction, two decoding units (for each of the two CPUs, the CPU1 and the CPU2), a single register file, a number of execution units, and a load/store unit, which is configured once the special instruction has been detected.

### Detailed description of the annexed drawings

The present invention will now be described, purely by way of non-limiting example, with reference to the attached drawings, in which:
- Figures 1 to 5, which regard the prior art, have already been described above;
- Figures 6 and 7 illustrate compiling of the tasks in an architecture according to the invention;
- Figure 8 illustrates, in the form of a block diagram, the architecture according to the invention; and
- Figure 9 illustrates, in greater detail, some structural particulars and particulars of operation of the architecture illustrated in Figure 8.

### Detailed description of an examplary embodiment of the invention

As already mentioned, the main idea underlying the invention corresponds to the recognition of the fact that, in order to support execution of processes of low computational weight (for example, 10% of the time), no duplication of the processing resources is necessary.

As is schematically represented in Figure 6, the solution according to the invention envisages definition of a new processor or CPU architecture, designated by CPU3, which enables execution of processes designed to be executed, in the solution according to the known art, on two or more distinct CPUs, such as the CPU1 and CPU2, without the applications thereby having to be recompiled for the new architecture.

Basically, the solution according to the invention aims at re-utilizing the original compiling flows envisaged for each CPU, adding downstream thereof a second step for rendering execution of the corresponding processes compatible.

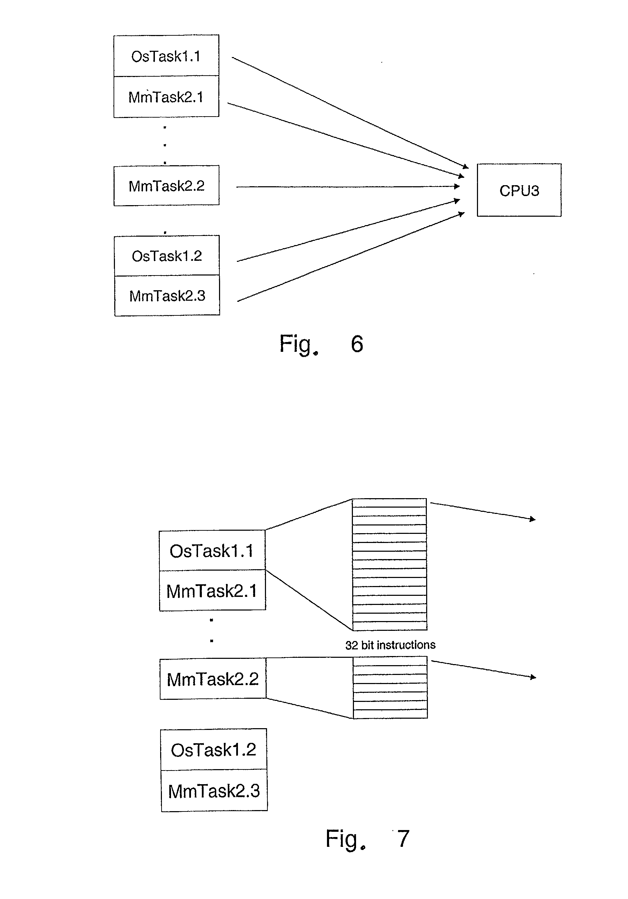

In particular, with reference to Figure 7, consider, in a first compiling step, the source code in a process OsTask1.1 for the operating system. In a traditional architecture, such as the one illustrated in Figure 1, the corresponding instructions should be executed on the CPU1, using the corresponding compiler.

Consider then, in the same first step, compiling of the source code of a process (MmTask2.1), for a multimedia audio/video/graphics application, which, in a traditional architecture, such as the one illustrated in Figure 1, would be executed on the CPU2, also in this case using the corresponding compiler, which is different from the compiler of the CPU1. It should moreover be recalled that, in a scheme such as the one illustrated by the diagram of Figure 1, the two processors CPU1 and CPU2 have an architecture of independent sets of instructions.

Now consider a second step, following upon which (at least) one special new instruction is entered at the head of the ones just generated. This special instruction enables identification of membership of the instructions that follow the corresponding set of instructions. This special instruction thus represents the instrument by which the CPU3 is able to pass from the execution mode for the set of instructions of the CPU1 to the execution mode for the set of instructions of the CPU2, and vice versa.

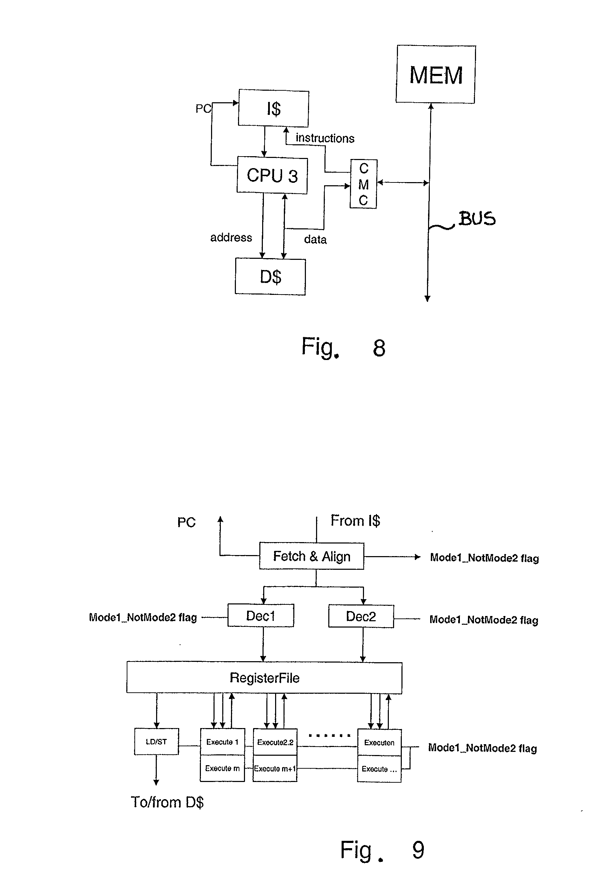

Figure 8 shows how the architecture of Figure 1 can be simplified from the macroscopic point of view by providing a single CPU, designated by CPU3, with associated respective cache memories, namely the data cache memory D$ and the instruction cache memory I$. The corresponding memory subsystem does not therefore involve a duplication of the cache memories and removes the competition in requesting access to the main memory MEM through the interface CMC, which interfaces on the corresponding bus. There derives therefrom an evident improvement in performance.

On the other hand, the processor CPU must be able to execute instructions generated by the corresponding compiler both to be executed on a processor of the type of the CPU1 and to be executed on a processor of the type of the CPU2, this likewise envisaging the capability of execution of the control instructions of the execution mode between the two CPUs.

Figure 9 shows the logic scheme of the CPU3 here proposed.

The instructions are addressed in the memory through a single program counter and are loaded by the unit designated by Fetch & Align. The latter in turn sends the instructions to the decoding units compatible with the sets of instructions of the CPU1 and CPU2. Both of these are able to detect the presence of the special instruction for passing the execution mode for the set of instructions 1 to the execution mode for the set of instructions 2, and vice versa. The flag thus activated is sent to all the units present in the CPU so as to configure its CPU1- or CPU2-compatible mode of operation. In particular, in the diagram of Figure 9, this flag has been identified with a signal designated as Model_NotMode2flag. In the simplest embodiment, this flag has the logic value "1" when the CPU operates on the set of instructions of the CPU1, and the logic value "0" when the CPU3 operates on the set of instructions of the CPU2. Of course, it is possible to adopt a convention that is just the opposite.

The subsequent instructions loaded are decoded (stages designated by Dec1 and Dec2), separating the bit field that defines their function (for example, addition) from the bit fields that address the operands.

The corresponding addresses are sent to a register file from which the operands of the instruction are read.

The operands and the bits that define the function to be executed are sent to the multiple execution units (Execute1, ..., Executem; Execute2.2, Executem+1, ..., Executen, execute ...) which perform the requested operation. The result may then be stored back in the register file with a writeback stage that is altogether similar to the one illustrated in Figures 2 and 3.

The load/store unit enables, instead, reading/writing of possible data from/in the memory, and there exist instructions dedicated to this purpose in each of the operating modes.

It will be appreciated, in particular, that the units that are compatible with'the execution mode, currently not used (for instance, the decoding units Dec1 and Dec2), can be appropriately "turned off" in order not to consume power.

Of course, without prejudice to the principle of the invention, the details of construction and the embodiments may vary widely with respect to what is described and illustrated herein, without thereby departing from the scope of the present invention as defined in the attached claims, it being in particular evident that the solution according to the present invention can be generalized to the use of a number of switching instructions between more than two execution modes for different CPUs.

## Claims

1. A processing architecture for executing at least one first set of instructions (OsTask1.1, OsTask1.2, ...) and one second set of instructions (MmTask2.1, MmTask2.2, MmTask2.3, ...) compiled for being executed by a first CPU (CPU1) and by a second CPU (CPU2), said first set of instructions (OsTask1.1, OsTask1.2, ...) not being executable by said second CPU and said second set of instructions (MmTask2.1, MmTask2.2, MmTask2.3, ...) not being executable by said first CPU, the architecture being **characterized in that** it comprises a single processor (CPU3) configured for executing both the instructions of said first set (OsTask1.1, OsTask1.2, ...) and the instructions of said second set (MmTask2.1, MmTask2.2, MmTask2.3, ...), said single processor (CPU3) being selectively switchable at least between one first operating mode, in which said single processor (CPU3) executes said first set of instructions (OsTask1.1, OsTask1.2, ...), and one second operating mode, in which said single processor (CPU3) executes said second set of instructions (MmTask2.1, MmTask2.2, MmTask2.3, ...), said single processor (CPU3) being configured for recognizing at least one switching instruction (Mode1_NotMode2 flag) at least between said first operating mode and said second operating mode and for switching between said first operating mode and said second operating mode according to said at least one switching instruction.

2. The architecture according to Claim 1, **characterized in that** said single processor (CPU3) has associated to it a single cache for the data (D$).

3. The architecture according to Claim 1 or Claim 2, **characterized in that** said single processor (CPU3) has associated to it a single cache for the instructions (I$).

4. The architecture according to any one of the preceding claims, **characterized in that** said single processor (CPU3) has associated to it a single interface (CMC) for dialogue via a bus with a main memory.

5. The architecture according to any one of the preceding claims, **characterized in that** a single program counter is provided for addressing said instructions in memory.

6. The architecture according to any one of the preceding claims, **characterized in that** said single processor (CPU3) comprises at least one first decoding module (DEC1) and at least one second decoding module (DEC2) for decoding, respectively, the instructions of said first set (OsTask1.1, OsTask1.2 ...) and, of said second set (MmTask2.1, MmTask2.2, MmTask2.3 ...).

7. The architecture according to any one of the preceding claims, **characterized in that** it comprises a unified file of registers (Register File) for reading the operands of the instructions of said first set (OsTask1.1, OsTask1.2 ...) and the instructions of said second set (MmTask2.1, MmTask2.2, MmTask2.3 ...).

8. The architecture according to any one of the preceding claims, **characterized in that** it comprises units that are selectively de-activatable when they are not involved in the execution of instructions in said first functioning mode or said second functioning mode.

9. A processing system implementing the architecture according to any one of the preceding claims from Claim 1 to Claim 8.

10. A method of using a processing system according to Claim 9, **characterized in that** it comprises the operations of:
- compiling sets of instructions of said at least one first set (OsTask1.1, OsTask1.2, ...) and said at least one second set (MmTask2.1, MmTask2.2, MmTask2.3, ...); and
- providing said at least one switching instruction (Model_NotMode2 flag) at the head of said sets of instructions.

11. The method according to Claim 10, **characterized in that** it comprises the operations of:
- compiling each process, using in an unaltered way the compilation flow of said first CPU (CPU1) and said second CPU (CPU2); and
- entering said switching instruction (Model_NotMode2 flag) at the head of said sets of instructions.
